# EUROPEAN PATENT APPLICATION

(11) **EP 4 600 630 A1**
(43) Date of publication of application: **13.08.2025**
(21) Application number: 24156836.9
(22) Date of filing: 09.02.2024
(51) Int. Cl.: G01N 1/06

(54) **SENSOR DEVICE AND METHOD FOR INSPECTING A BLADE OF A MICROTOME AND MICROTOME**

(71) Applicant: Leica Biosystems Nussloch GmbH, 69226 Nussloch (DE)
(72) Inventor: Hertfelder, Paul, 69115 Heidelberg (DE); Pawar, Neeraja, 69168 Wiesloch (DE); Varanasi, Dheeraj, 69121 Heidelberg (DE)
(74) Representative: Schaumburg und Partner Patentanwälte mbB

(57) **Abstract**

A sensor device for inspecting a blade (108) of a microtome (100) comprises an imaging device arrangeable on the microtome (100) and configured to capture at least one image of an edge of the blade (108) and to generate image data corresponding to said image. The sensor device further comprises a control unit (122) configured to receive and process the image data and to determine a blade state information based on the image data, the blade state information corresponding to a state of deterioration of the blade (108).

## Description

### Technical fields

The invention relates to a sensor device for inspecting a blade of a microtome. The invention further relates to a microtome, and to a method for inspecting a blade of a microtome.

### Background

Microtomes are specialized devices widely used in histology and pathology for producing thin cuts of biological specimens suitable for microscopic examination. The biological specimen is prepared by being embedded in a supporting material, such as paraffin or resin. The embedded specimen is then mounted to an object holder of the microtome. To cut the specimen, the object holder is typically moved repeatedly past a blade held by a blade holder of the microtome, although there are other arrangements in which the blade is moved instead. To make very thin and precise cuts, the blade must be very sharp. To ensure that the cuts are made with a sharp blade, a laboratory technician typically inspects the cuts for irregularities, for example an uneven cut or whether shreds, split sections are formed instead of smooth cut sections and ribboning. Once the laboratory technician detects such irregularities, the used blade is replaced by a new blade. However, it would be desirable if the deterioration of the blades could be detected earlier.

### Summary

It is an object to provide a sensor device for inspecting a blade of a microtome and a microtome that make it possible to detect the deterioration of a microtome blade earlier than previously known.

The aforementioned object is achieved by the subject-matter of the independent claims. Advantageous embodiments are defined in the dependent claims and the following description.

The proposed sensor device for inspecting a blade of a microtome comprises an imaging device arrangeable on the microtome and configured to capture at least one image of an edge of the blade and to generate image data corresponding to said image. The sensor device further comprises a control unit configured to receive and process the image data and to determine a blade state information based on the image data, the blade state information corresponding to a state of deterioration of the blade.

Instead of inspecting the cut made by the microtome, the proposed sensor device inspects the blade itself to determinate the blade's state of deterioration. The imaging device, for example a camera, especially a high-resolution camera, or a low-magnification microscope, is arranged such at the microtome that the imaging device is able to capture an image of the edge of the blade. Contrary to a human observer, the imaging device is able to detect small irregularities and signs of wear on the edge of the blade much more reliably. These small irregularities and signs of wear along the cutting edge are indicative of the deterioration of the blade. The sooner they are picked up, the earlier the blade's deterioration can be detected. Thus, based on the image of the edge of the blade the control unit can determine the state of deterioration of the blade very reliable and detect a deterioration of the blade earlier than previously known.

In an embodiment, the control unit is configured to determine as the blade state information whether the blade needs to be replaced. Several states of deterioration may be predefined as possible blade state information, for example "blade needs to be replaced soon" or "blade needs to be replaced now". In this embodiment, the control unit determines whether the blade's state of deterioration is such that it needs to be replaced now to ensure a clean and smoot cut.

In another embodiment, the control unit is configured to determine the blade state information based on an image comparison between the image captured by the imaging device and at least two previously captured reference images of microtome edge of the blades in different states of deterioration. The reference images may be provided either locally, for example stored on a memory unit of the control unit, or remotely, for example stored on a remote server or in a cloud service, in particular in form of a database. The reference images in the database are images of edges in various states of deterioration and labeled accordingly. The control unit uses the image comparison method to compare the image of the edge of the blade currently used with the reference images from the database to determine the state of deterioration of the currently used blade. The image comparison method may be a Pixel-by-Pixel Comparison, where the two images are compared at the pixel level to detect any differences or anomalies, which is particularly useful for identifying minute changes or defects on the blade. A Structural Similarity Index (SSIM) may also be used. The SSIM measures the similarity between the two images by focusing on changes in texture, luminance, and contrast, rather than just pixel differences. Further, a Feature-Based Comparison may be used as the image comparison method and involves extracting key features from images, such as edges, contours, or specific shapes, and comparing these features to identify discrepancies between the images. This method is particularly useful since the two images might have slight variations in orientation or scaling.

In another embodiment, the control unit is configured to determine the blade state information using a machine learning method. The machine learning method is preferably trained on a training data set comprising images of edges in various states of deterioration which are labeled accordingly. Machine learning methods have been very successfully employed for machine vision tasks and are used in this embodiment to very reliably determine the state of deterioration of the currently used blade. Preferably Convolutional Neural Networks, Recurrent Neural Networks and other Neural Networks and Deep Learning methods are used as the machine learning method since they excel at machine vision related tasks. However, other machine learning methods may be employed, such as K-Nearest Neighbors algorithms and Support Vector Machines.

In another embodiment, the sensor device comprises an output device configured to output a visual and/or auditory information to a user, wherein the control unit is configured to control the output device to generate an output according to the blade state information. The output device may be a screen for displaying a text message corresponding to the blade state information, for example "replace blade" or "blade needs to be replaced soon". However, the output device may also be as simple as a small light which is turned on once the blade needs to be replaced. The output device may also comprise a loudspeaker or a small buzzer for giving auditory feedback to the user when the blade needs to be replaced. This makes it possible for the user to quickly replace the blade when the blade begins to deteriorate to the point where the quality of the cut is significantly reduced, thus ensuring a high quality of cuts.

The invention also relates to a microtome for producing thin cuts for microscopy. The microtome comprises a sensor device as described above, a blade holder configured to hold the blade, and an object holder configured to receive an object and to be moved relative to the blade held by the blade holder to produce thin cuts of the object.

The microtome has the same advantages as the sensor device described above. In particular, the microtome may be supplemented with the features of the dependent claims directed at the sensor device. Furthermore, the sensor device described above may be supplemented with the features described in this document in connection with the microtome.

Preferably, the imaging device of the sensor device is arranged at the object holder. The object holder is moved past the blade in order to cut the object. Even when the microtome is not in use, the object holder and the blade are arranged in close proximity. This makes the object holder the ideal position to place the imaging device to give the imaging device the best viewing angle of the blade.

In an embodiment, the control unit is configured to cause the imaging unit to periodically capture an image of the edge of the blade based on the movement and/or position of the object holder. For example, the control unit may be configured to cause the imaging unit to capture an image of the edge of the blade whenever the object holder is in a certain position, such as the top position. Periodically capturing an image of the edge ensures a constant control of the blade's state. This makes it possible to detect a deterioration of the blade quickly and early.

In another embodiment, the blade holder is configured to eject the blade received by the blade holder. The control unit may be configured to determine as the blade state information whether the blade needs to be replaced and to cause the blade holder to eject the blade when the control unit has determined that the blade needs to be replaced. Once the edge of the blade has deteriorated to a point where the cuts are no longer clean, the blade is ejected making room for a new blade. An exemplary blade holder configured to eject a spent blade is described in DE 10 2004 051 974 A1. This embodiment partially automates the process of replacing, thereby greatly improving the usability of the microtome.

In another embodiment, the microtome comprises a blade magazine configured to store additional blades and a blade replacement unit configured to replace the blade held by the blade holder with one of the additional blades stored in the blade magazine. The control unit may be configured to determine as the blade state information whether the blade needs to be replaced and to cause the blade replacement unit to replace the blade when the control unit has determined that the blade needs to be replaced. For example, the blade replacement unit may comprise a mechanism for ejecting a spent blade into a collection container, and another mechanism for gathering a new blade from the magazine for replacement. An exemplary blade replacement unit is described in DE 10 10 2012 213 824 B4. In this embodiment, the replacement of the blade is fully automated, further increasing the usability of the microtome and making it possible to fully automate the production of thin cuts from the object.

In another embodiment, the blade holder is configured to move the blade perpendicular to the direction of movement of the object holder. The control unit may be configured to determine as the blade state information whether the edge of a section of the blade cutting the object has deteriorated, and to cause the blade holder to move the blade such that a new section of the blade is cutting the object, the new section having a non-deteriorated edge. Typically, not the whole length of the blade is used to cut the object. This means that only a section of the blade will show wear from use. In this embodiment, once the section used to cut the object shows signs of wear, the blade is moved to use a fresh section of the blade to cut the sample. This allows the blade to be fully utilized, thereby reducing waste.

In another embodiment, the control unit is configured to control the movement of the object holder based on the blade state information. For example, the control unit may cause the object holder to move slower of faster depending on the state of deterioration of the blade. The control unit may also cause the object holder to only perform a certain number of subsequent cuts once a predetermined state of deterioration has been detected.

In particular, the control unit is configured to determine as the blade state information whether the blade needs to be replaced, and to control the object holder to prevent a movement of the object holder when the control unit has determined that the blade needs to be replaced. Once the control unit has determined that the blade needs to be replaced, the object may be damaged by subsequent cuts. By stopping the object holder from moving, the control unit prevents further cuts from being made, thereby protecting the object from damage.

The invention further relates to a method for inspecting a blade of a microtome. The method comprises capturing at least one image of an edge of the blade and generating image data corresponding to said image. The method further comprises processing the image data to determine a blade state information based on the image data, the blade state information corresponding to a state of deterioration of the blade.

The method has the same advantages as the sensor device and the microtome described above. In particular, the method may be supplemented with the features of the dependent claims directed at the sensor device or the microtome. Furthermore, the sensor device and the microtome described above may be supplemented with the features described in this document in connection with the method.

### Short Description of the Figures

Hereinafter, specific embodiments are described referring to the drawings, wherein:
- Figure 1: is a schematic view of a microtome according to an embodiment; and
- Figure 2: is a flowchart of a method for inspecting a blade of a microtome.

### Detailed Description

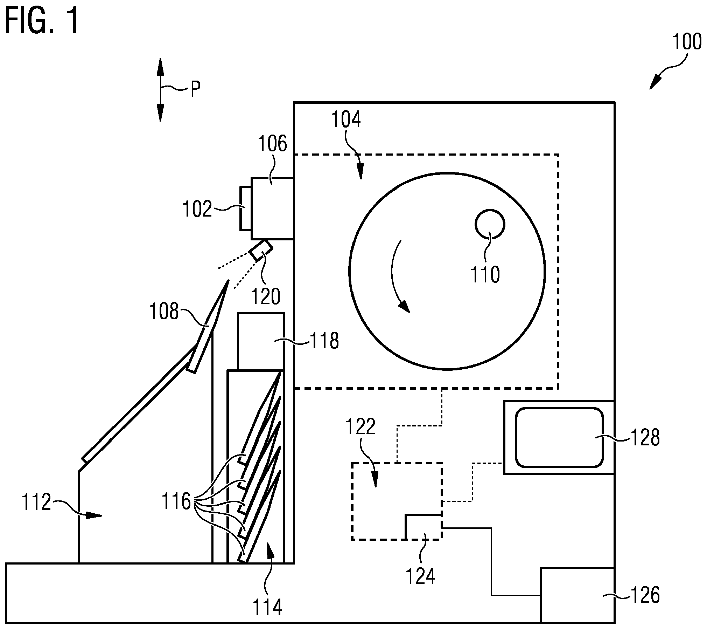

Figure 1 is a schematic view of a microtome 100 according to an embodiment.

The microtome 100 is used to cut an object 102 into thin cuts, also called thin sections. The object 102 may be a histological sample or other type of prepared biological sample, typically embedded in a paraffin block for easier sectioning. The thin cuts are typically in the range of a few micrometers in thickness, and primarily used for microscopic examination in field such as histology, pathology, and biology.

The microtome 100 comprises a sectioning unit 104 having an object holder 106 configured to hold the object 102 during the cutting operation. The sectioning unit 104 is configured to move the object holder 106, and thus the object 102, relative to a blade 108. The movement of the object holder 106 during the cutting operation is vertical and indicated in Figure 1 by a double-headed arrow P. In the embodiment shown in Figure 1, the sectioning unit 104 is operated manually by a hand crank 110. Alternatively, the sectioning unit 104 may be operated automatically by a motor, in particular an electrical motor. The motor may also be controlled by a movement of the hand crank 110, for example by translating the movement of the hand crank 110 into a control signal for the motor controlling the movement of the object holder 106.

The blade 108 is held by a blade holder 112 of the microtome 100. The blade holder 112 is configured to fasten the blade 108 in a detachable manner such that the blade 108 can be replaced, for example when an edge of the blade 108 has deteriorated to a point where the blade 108 no longer cuts properly. In particular, the blade holder 112 may comprise a mechanism for automatically ejecting a used blade 108. In the present embodiment, the blade holder 112 comprises a blade magazine 114 for storing additional blades 116, which is exemplary arranged below the currently used blade 108. The blade holder 112 further comprises a blade replacement unit 118 configured to replace the currently used blade 108 by one of the additional blades 116 stored in the blade magazine 114. Further, the blade holder 112 may be configured to position the blade 108 horizontally, i.e. along the direction of the edge of the blade 108. This allows the blade 108 to be positioned perpendicular to the movement direction P of the object holder 106, for example to replace a section of the blade 108 that has become blunt with another, fresh section.

The microtome 100 further comprises a sensor device for inspecting the blade 108. The sensor device comprises an imaging unit 120 that is arranged such on the microtome 100 that the imaging unit 120 can capture at least one image of the edge of the blade 108 currently held by the blade holder 112 during the cutting operation. In the present embodiment, the imaging unit 120 is exemplary arranged on the object holder 106 of the microtome 100. The imaging unit 120 is further configured to generate image data corresponding to the image for further processing. In order to capture a high-resolution image of the edge suitable for further processing, the imaging device may for example be a high-resolution camera or a low magnification microscope.

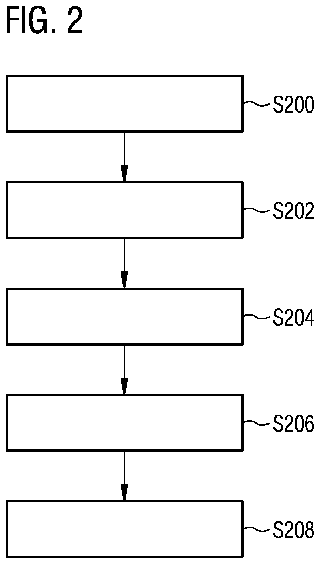

The sensor device further comprises a control unit 122 exemplary comprising a memory unit 124, and an interface 126 for accessing remote data, for example an ethernet or USB interface. The control unit 122 is configured to receive and process the image data from the imaging unit 120 in order to generate a blade state information. The blade state information corresponds to a state of deterioration of the blade 108, i.e. how well the blade 108 is suited for cutting the object 102. The blade state information may be binary, for example corresponding to the information whether the blade 108 needs to be replaced or not. Alternatively, the blade state information may be gradual, for example stating how many cuts can be made using the current blade 108 before the blade 108 needs to be replaced. In order to determine the blade state information, the control unit 122 analyzes the image of the edge captured by the imaging unit 120, for example for defects and/or irregularities that indicate wear of the blade 108. How the control unit 122 determines the blade state information is described in more detail in the following with reference to Figure 2.

The control unit 122 may also be configured to take a number of actions based on the blade state information. For example, the sensor device may comprise an output device 128, like a display, a loudspeaker, or a buzzer. The control unit 122 may be configured to control the output device 128 according to the blade state information. In one example, the controller may generate a visual message that the blade 108 needs to be replaced and control the output device 128 to display the message to a user. The control unit 122 may also be configured to control the blade replacement unit 118 to automatically replace the currently used blade 108 with one of the additional blades 116 from the blade magazine 114 when the control unit 122 has determined that the blade 108 needs to be replaced.

The control unit 122 may further be configured to control the imaging unit 120 to capture the image of the edge, in particular to control the imaging unit 120 to capture the image of the edge periodically. For example, the control unit 122 may control the imaging unit 120 to capture the image of the edge every time the object holder 106 is at its highest vertical position.

Figure 2 is a flowchart of a method for inspecting a blade 108 of a microtome. In the following, the method is only exemplary described as performed by the sensor device described above with reference to Figure 1.

The method is started in step S200. In step S202 at least one image of the edge of the blade 108 is captured using the imaging device. In particular, the image comprises the section of the edge that is used to cut the object 102. Image data is generated from the image and transmitted to the control unit 122 for further processing.

In step 204, the control unit 122 analyzes the image data to generate the blade state information. For analyzing the image data, the control unit 122 may employ image comparison. For example, the control unit 122 may compare the image of the edge captured by the imaging unit 120 to a collection of reference images showing edge of the blades in various states of wear and deterioration. Such a database of reference images may be stored locally in the memory unit 124 of the control unit 122. Alternatively, the database may be stored remotely and accessed by the control unit 122 via the interface 126.

Alternatively, or additionally, the control unit 122 may employ machine learning methods for analyzing the image data. A suitable machine learning model, for example a deep learning model, may be trained using the database of reference images described above where the reference images have been labelled according to their state of wear and deterioration. The model may be stored locally on the memory unit 124 or remotely, for example on a server or in a cloud service. A remotely stored model may be accessed using the interface 126.

In the optional step S206 the control unit 122 performs one or more actions based on the blade state information. For example, the control unit 122 may replace the blade 108 as described above with reference to Figure 1. Instead of replacing the blade 108, the blade 108 may also be moved perpendicular to the direction of movement of the object 102 to use a fresh section of the edge to cut the object 102. Accordingly, the control unit 122 may analyze the image data in step S204 to determine whether a section of the edge exists that does not exhibit wear. When the control unit 122 has determined a deterioration of the currently used blade 108, the control unit 122 may then in step S206 control the blade holder 112 to move the blade 108 such that the non-deteriorated section of the edge is used to cut the object 102.

To prevent damage to the object 102, the control unit 122 may also control the movement of the object holder 106 in step S206 according to the blade state information. For example, the control unit 122 may control the sectioning unit 104 such that a movement of the object holder 106 is prevented once the control unit 122 has determined that the blade 108 needs to be replaced. This has the additional advantage that the object holder 106 is fixed in place while the user replaces the blade 108, thereby preventing injury.

The method is then ended in step S208.

In the embodiments described with reference to Figures 1 and 2, at least the imaging unit 120 and the control unit 122 form the sensor device. Other elements and features shown in Figures 1 and 2 and mentioned in the preceding description may be a part of the sensor device. Likewise, method steps described with reference to the sensor device may be part of the claimed method.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Microtome
- 102: Object
- 104: Sectioning unit
- 106: Object holder
- 108: Blade
- 110: Hand crank
- 112: Blade holder
- 114: Blade magazine
- 116: Blade
- 118: Blade replacement unit
- 120: Imaging unit
- 122: Control unit
- 124: Memory unit
- 126: Interface
- 128: Output device

## Claims

1. Sensor device for inspecting a blade (108) of a microtome (100), comprising
an imaging device arrangeable on the microtome (100) and configured to capture at least one image of an edge of the blade (108) and to generate image data corresponding to said image;
a control unit (122) configured to receive and process the image data and to determine a blade state information based on the image data, the blade state information corresponding to a state of deterioration of the blade (108).

2. The sensor device according to claim 1, wherein the control unit (122) is configured to determine as the blade state information whether the blade (108) needs to be replaced.

3. The sensor device according to claim 1 or 2, wherein the control unit (122) is configured to determine the blade state information based on an image comparison between the image captured by the imaging device and at least two previously captured reference images of microtome (100) blade (108) edges in different states of deterioration.

4. The sensor device according to any one of the preceding claims, wherein the control unit (122) is configured to determine the blade state information using a machine learning method.

5. The sensor device according to any one of the preceding claims, comprising an output device (128) configured to output a visual and/or auditory information to a user, wherein the control unit (122) is configured to control the output device (128) to generate an output according to the blade state information.

6. A microtome (100) for producing thin cuts for microscopy, comprising
a sensor device according to any one of the preceding claims;
a blade holder (112) configured to hold the blade (108); and
an object holder (106) configured to receive an object (102) and to be moved relative to the blade (108) held by the blade holder (112) to produce thin cuts of the object (102).

7. The microtome (100) according to claim 6, wherein the control unit (122) is configured to cause the imaging unit (120) to periodically capture an image of the edge of the blade based on the movement and/or position of the object holder (106).

8. The microtome (100) according to claim 6 or 7, wherein the blade holder (112) is configured to eject the blade (108) received by the blade holder (112), and
wherein the control unit (122) is configured to determine as the blade state information whether the blade (108) needs to be replaced and
to cause the blade holder (112) to eject the blade (108) when the control unit (122) has determined that the blade (108) needs to be replaced.

9. The microtome (100) according to any one of the claims 6 to 8, comprising a blade magazine (114) configured to store additional blades (116) and a blade replacement unit (118) configured to replace the blade (108) held by the blade holder (112) with one of the additional blades (116) stored in the blade magazine (114),
wherein the control unit (122) is configured to determine as the blade state information whether the blade (108) needs to be replaced and
to cause the blade replacement unit (118) to replace the blade (108) when the control unit (122) has determined that the blade (108) needs to be replaced.

10. The microtome (100) according to any one of the claims 6 to 9, wherein the blade holder (112) is configured to move the blade (108) perpendicular to the direction of movement of the object holder (106), and
wherein the control unit (122) is configured to determine as the blade state information whether the edge of a section of the blade (108) cutting the object (102) has deteriorated, and
to cause the blade holder (112) to move the blade (108) such that a new section of the blade (108) is cutting the object (102), the new section having a non-deteriorated edge.

11. The microtome (100) according to any one of the claims 6 to 10, wherein the control unit (122) is configured to control the movement of the object holder (106) based on the blade state information.

12. The microtome (100) according to claim 11, wherein the control unit (122) is configured to determine as the blade state information whether the blade (108) needs to be replaced, and
to control the object holder (106) to prevent a movement of the object holder (106) when the control unit (122) has determined that the blade (108) needs to be replaced.

13. Method for inspecting a blade (108) of a microtome (100), comprising the following steps:
a) capturing at least one image of an edge of the blade (108) and generating image data corresponding to said image; and
b) processing the image data to determine a blade state information based on the image data, the blade state information corresponding to a state of deterioration of the blade (108).
